# FASCICULE DE BREVET EUROPEEN

(11) **EP 1 579 199 B1**
(45) Date de publication et mention de la délivrance du brevet: **23.02.2011**
(21) Numéro de dépôt: 03796165.3
(22) Date de dépôt: 04.12.2003
(51) Int. Cl.: G01N 21/43, G01N 17/00

(54) **DISPOSITIF DE DETECTION DE LA CORROSION**
VORRICHTUNG ZUM NACHWEIS DER KORROSION
CORROSION DETECTING DEVICE

(30) Priorité: 23.12.2002 FR 0216477
(43) Date de publication de la demande: 28.09.2005
(73) Titulaire: Institut Français du Pétrole, 92852 Rueil-Malmaison Cedex (FR)
(72) Inventeur: FROT, Didier, F-94600 Choisy Le Roi (FR); GUILLOU, Françoise, F-92500 Rueil-Malmaison (FR); LONGAYGUE, Xavier, F-78390 Bois d'Arcy (FR)
(86) Numéro de dépôt international: PCT/FR2003/003594
(87) Numéro de publication internationale: WO 2004/065942

(56) Documents cités:
- US-A- 5 367 583
- US-A- 5 646 400
- DATABASE WPI Section EI, Week 197708 Derwent Publications Ltd., London, GB; Class S02, AN 1977-B6488Y XP002255144 & SU 523 295 A (PAPERNO M B) 2 août 1976 (1976-08-02)

## Description

La présente invention concerne un dispositif de détection de la corrosion dans lequel on utilise la mesure d'un indice de réfraction pour obtenir et transmettre un signal représentatif d'un état de corrosion. Cette invention peut s'appliquer avantageusement pour détecter la corrosion d'une conduite de transport d'un effluent, par exemple des hydrocarbures. Dans une variante préférée, une fibre optique est utilisée.

La présente invention présente les avantages de simplicité, de précision et d'adaptabilité aisée à différentes mises en oeuvre de dispositifs soumis à des conditions de corrosion.

Ainsi, la présente invention concerne un dispositif de détection de la corrosion induite par un milieu, comportant: une chambre fermée par une pastille fabriquée dans un matériau tel que la pastille devient perméable au milieu une fois corrodée par ce milieu, et des moyens de mesure de l'indice de réfraction du fluide présent dans la chambre.

Les moyens de mesure peuvent comprendre une source lumineuse et un photo détecteur.

Les moyens de mesure de l'indice de réfraction peuvent comprendre au moins une portion de fibre optique.

Une extrémité de la fibre optique peut se trouver proche de la pastille. La chambre peut contenir de l'air.

La pastille peut être liée à un support résistant à la pression du milieu corrosif.

Le support peut être perméable au milieu.

Le dispositif peut comprendre des moyens d'équilibrage de la pression de part et d'autre de la pastille.

Les moyens de mesures de l'indice de réfraction peuvent être inclus dans la chambre.

Le dispositif peut comprendre l'un des moyens de transmission des mesures suivants:
- ondes (radio, ultrasonores, électromagnétiques);
- fibre optique;
- conducteur électrique.

La présente invention sera mieux comprise et ses avantages apparaîtront plus clairement à la lecture de la description suivante d'exemples de réalisation, nullement limitatifs, illustrés par les figures ci-annexées, parmi lesquelles:
- les figures 1 et 2 montrent schématiquement le principe du dispositif selon l'invention,
- la figure 3 montre un exemple d'enregistrement du signal représentatif d'un état corrodé,
- les figures 4A et 4B montrent un exemple d'application du dispositif à une structure sous pression,
- la figure 5 montre une variante de réalisation du capteur selon l'invention,
- les figures 6A, 6B et 6C illustrent des principes de fonctionnement d'une variante,
- les figures 7 et 8 illustrent des variantes selon l'invention.

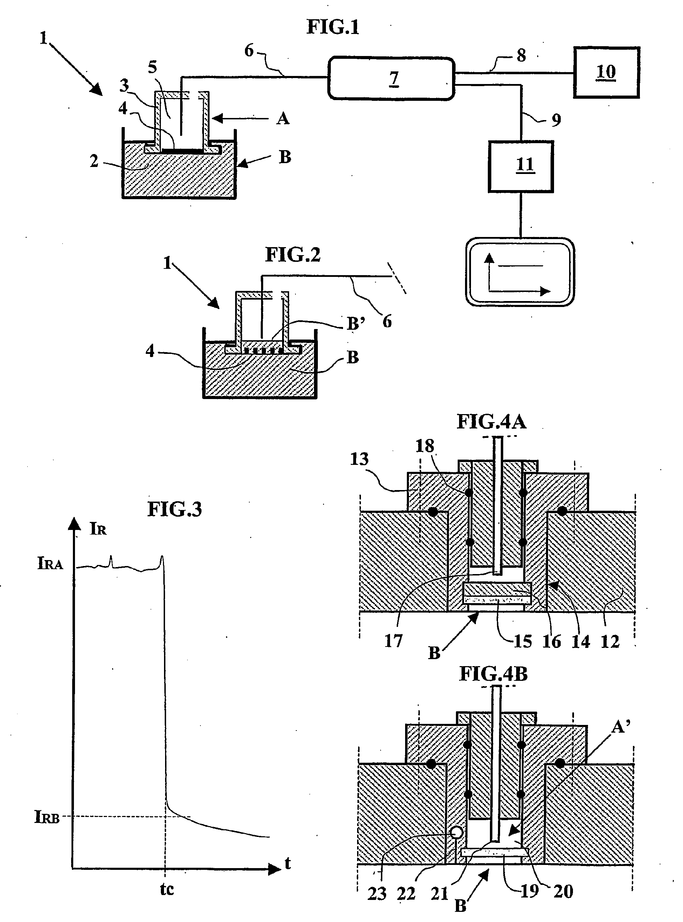

La figure 1 montre un capteur 1 placé dans un liquide 2 corrosif. Le capteur 1 est constitué par un boîtier 3 obturé par une pastille 4 qui sépare le volume interne 5 du boîtier de l'ambiance extérieure, c'est-à-dire le milieu corrosif. Une fibre optique 6 est insérée dans le boîtier 3 de telle façon que l'extrémité de la fibre soit positionnée à proximité de la pastille 4.

La fibre optique 6 est reliée à un coupleur 7 constitué de deux fibres optiques 8 et 9, respectivement connectées à une source lumineuse 10 et à un photo détecteur 11. La source lumineuse 10, par exemple une diode laser, émet un rayon lumineux transmis par les fibres 8 et 6 jusqu'au milieu A présent dans l'espace interne du boîtier 3. Le milieu A réfléchit le rayon lumineux, selon sa caractéristique de réflexion propre. Le rayon réfléchi est transmis par l'intermédiaire de la fibre optique 6 au coupleur 7, lequel guide le rayon lumineux réfléchi vers la fibre optique 9 reliée à un photo détecteur, par exemple une photodiode, adapté à mesurer l'intensité du rayon réfléchi par le milieu A présent à l'intérieur de la cellule. Tant que la pastille 4 n'est pas attaquée, et partiellement détruite ou perforée, par le milieu corrosif extérieur, l'intensité du rayon réfléchi reste constante. On détecte ainsi l'état de conservation de la pastille, et on en déduit qu'il n'y a pas d'effet de corrosion sur la pastille. Le choix du matériau de la pastille et de son épaisseur sera fonction du niveau d'alarme souhaité dans des conditions de service en corrosion déterminées. De préférence, le matériau de la pastille est le même que celui de la structure soumise à la corrosion. L'épaisseur de la pastille est de préférence choisie inférieure à la surépaisseur déterminée lors de la conception de l'équipement pour tenir compte de la corrosion de la structure.

La figure 2 montre une vue partielle schématique qui illustre le principe de fonctionnement du capteur. La pastille 4 a été corrodée par le milieu B, ce qui a permis le passage d'une certaine quantité du milieu B à travers la pastille pour atteindre l'espace 5 interne à la cellule. Lorsque cette quantité de milieu B' est suffisante, l'intensité du rayon réfléchi change nettement dans la mesure où les indices de réfraction des milieux A et B (ou B') sont différents. La variation de mesure d'intensité du rayon réfléchi est donc indicative d'un degré de corrosion, correspondant à l'épaisseur de la pastille 4.

La figure 3 montre un enregistrement du signal reçu par la photodiode Ir en fonction du temps t. La mesure IrA donne le niveau d'intensité du rayon incident résultant du milieu A en contact avec l'extrémité de la fibre optique. Au temps tc, la pastille 4 a été perforée sous l'effet de la corrosion par le milieu B. Dans l'essai présent, il s'agit d'une solution H2SO4 5M et la pastille métallique utilisée a une épaisseur de 50 µm. Après pénétration du milieu B au contact de la fibre optique, la photodiode mesure l'intensité IrB du rayon réfléchi, intensité nettement inférieure à celle de IrA.

Les figures 4A et 4B illustrent schématiquement des principes de différentes variantes de capteur selon l'invention, adaptées à être utilisées pour des installations dans lesquelles le fluide corrosif est sous pression.

Dans ce cas, la pastille de test de corrosion est en contact direct avec le milieu B sous pression. La surface de la pastille doit donc résister à cette pression du milieu B. Or pour que la détection d'un phénomène de corrosion soit assez sensible, l'épaisseur de la pastille est généralement trop fine pour intrinsèquement résister à la pression. Différents systèmes peuvent être envisagés:
- le principe du maintien d'une même pression de part et d'autre de la pastille pour que celle-ci soit équilibrée en pression,
- le principe du dépôt de la pastille sur un support résistant à la pression mais suffisamment poreux pour laisser s'écouler le milieu B vers la fibre optique une fois la pastille perforée par la corrosion.

La figure 4A illustre le principe d'un capteur fixé sur la paroi 12 d'une enveloppe contenant un milieu B corrosif et sous pression. Le capteur est fixé par une bride 13 sur un perçage 14 dans la paroi. Une pastille 15 de métal sensible à la corrosion est déposée sur un support 16 ayant une perméabilité au milieu B telle que, dès que la pastille 15 atteint un certain niveau de corrosion (piqûres, porosité,...), le milieu B pénètre jusqu'à l'extrémité de la fibre optique 17. A cet instant, comme décrit plus haut, l'indice de réfraction du milieu dans lequel se trouve l'extrémité de la fibre est modifié, ce qui informe du degré de la corrosion. Le support 16 peut être un métal fritté, un disque perforé, ou équivalent. Les fonctions de ce support sont de soutenir la pastille en contact avec un fluide sous pression, tout en permettant au milieu B de pénétrer jusqu'à l'extrémité de la fibre optique 17 à la suite de la perforation par corrosion de la pastille 15. Bien entendu, des joints d'étanchéité empêchent les fuites externes dès lors que la pastille est corrodée.
La figure 4B illustre schématiquement le principe d'un pastille 19, fine donc peu résistante à la pression, mais adéquate pour la détermination d'un niveau de corrosion. Le montage du capteur peut être identique à celui de la réalisation de la figure 4A. Mais ici, la chambre 20 dans laquelle se trouve l'extrémité de la fibre optique 21 est mise à la même pression que celle qui règne dans le milieu B. Pour cela, la chambre 20 est remplie d'un fluide A', de compressibilité proche de celle du milieu B, et pressurisée par un dispositif de transmission de pression comprenant un conduit 22 de prise de la pression dans le milieu B, des moyens de mise en pression 23 (par exemple un piston, une membrane) du fluide A'. Ainsi, la pression est identique de part et d'autre de la pastille, ce qui autorise une épaisseur faible. Lorsque la corrosion aura atteint un niveau déterminé par l'épaisseur et la nature de matériau de la pastille, le milieu B pénètre dans la chambre 20 où se trouve le fluide A' pour se mélanger et faire varier l'indice de réfraction. On peut aussi choisir un fluide A' subissant un changement important d'indice de réfraction dès pollution par le milieu B.

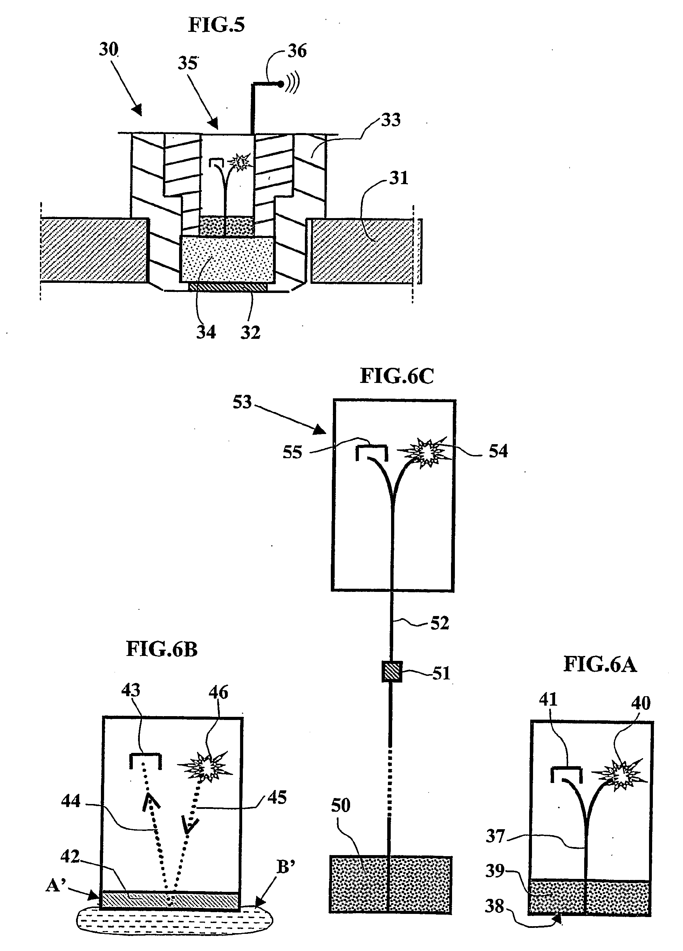

La figure 5 illustre le principe d'une variante du capteur selon l'invention. Le dispositif 30 est fixé sur la paroi 31 d'une structure en contact avec les fluides corrosifs du milieu B. Une pastille 32 obture l'extrémité du corps 33 du capteur. Un support 34, en matériau poreux et perméable, maintient la pastille 32 sous les efforts de pression du milieu B. Le corps du capteur contient une "capsule" 35 de détection de la variation de l'indice de réfraction. Sur cette figure, la représentation schématique de la capsule 35 est identique à la représentation illustrée sur la figure 6A, décrite plus loin. Cette capsule comprend des moyens de transmission de la mesure: par conducteur électrique, fibre optique, ondes (radio, ultrasonores, électromagnétiques,...) comme schématisé par la référence 36. Ainsi, le capteur peut, dans une variante, être totalement libre de liaison matérielle de communication. Il sera simple de multiplier le nombre de capteurs placés sur une structure pour effectuer une gestion de la corrosion de cette structure, par exemple en utilisant des pastilles d'épaisseur différentes à des endroits déterminés, ou en les disposant sur un même emplacement pour faire un "monitoring" local de la corrosion.

La figure 6A illustre un principe de capsule 35, dans lequel une fibre optique 37 est maintenue à proximité de la base 38 de la capsule par une épaisseur de résine 39. Une source lumineuse (par exemple une diode) émet un rayon lumineux transmis à la base 38 par l'intermédiaire de la fibre optique. La base 38 de la capsule est en contact, ou au voisinage du matériau poreux 34 (figure 5), ou équivalent, de façon que le fluide du milieu B qui traverse à la fois la pastille corrodée 32 et le matériau poreux 34 fait varier l'indice de réfraction à l'extrémité de la fibre 37. Cette variation est mesurée par le détecteur 41 (par exemple une photodiode). La capsule comprend également les moyens électroniques (non représentés) pour gérer et traiter l'information afin de la transmettre à l'utilisateur, par exemple par ondes comme illustré sur la figure 5.

La figure 6B montre l'utilisation d'un dioptre 42 constitué par un milieu A' et le milieu B' ayant pénétré dans le matériau poreux 34. Un capteur 43 mesure une caractéristique du rayon lumineux réfléchi 44, résultant d'un rayon incident 45 issu d'une source lumineuse 46. Comme selon la capsule de la figure 6A, des moyens électroniques internes à la capsule gèrent et transmettent l'information de variation de l'indice de réfraction du milieu B' à l'utilisateur.

La figure 6C reprend le principe illustré par les figures 1, 2, 4A et 4B, dans lesquelles le capteur contient l'extrémité d'une fibre optique 50 qui se prolonge par une autre longueur de fibre 52, par exemple raccordée par un connecteur 51. Une capsule de mesure 53 contient la source 54 et les moyens de mesure 55 de la variation de l'indice de réfraction à l'extrémité de la fibre 50.

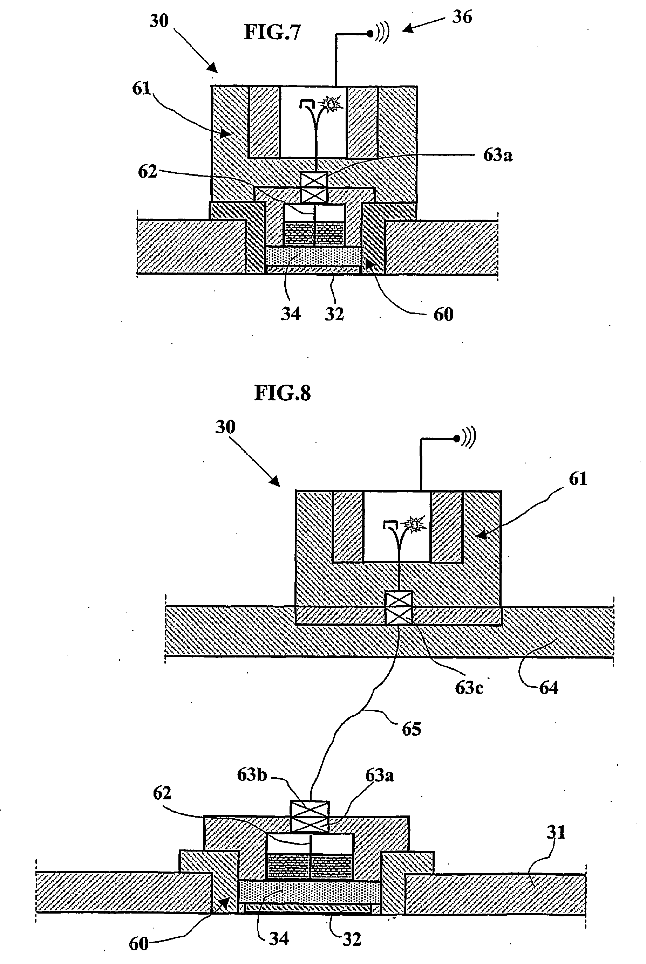

Les figures 7 et 8 illustrent un dispositif de détection de la corrosion dans lequel on utilise la possibilité avantageuse de séparer la fonction "corrosion" de la fonction "mesure de la corrosion", ce qui permet différents modes de mise en oeuvre de la présente invention.

La figure 8 illustre un dispositif de détection de la corrosion 30 constitué en deux parties référencées 60 et 61. La partie 60 est fixée sur la paroi 31 de la structure, et comporte essentiellement la pastille de corrosion 32, le support de pastille, ou équivalent, 34, et une portion de fibre optique 62 montée de façon à pouvoir détecter un fluide introduit à travers la pastille et être raccordée à une liaison optique par des moyens de connexion 63a. Cette partie 60 ne comporte donc que des éléments passifs.

La partie 61 est l'élément de mesure et de détection en tant que tel, qui comprend des moyens de connexion 63b coopérant avec les moyens de connexion 63a de la partie fixe 60. Comme cela a été décrit plus haut, cette partie comprend la source lumineuse et le capteur de mesure de l'indice de réfraction. L'information est envoyée à l'utilisateur par les moyens référencés 36, ou par tout autre moyen équivalent.

Cette réalisation présente les avantages suivants: - changement aisé de la partie active (mesure, transmission); - utilisation d'un seul appareil de mesure que l'on vient connecter, selon les besoins, sur chacun des points fixes de contrôle de corrosion.

La figure 8 est une autre application du principe de conception illustré par la figure 7. On retrouve comme sur la figure 7, la même partie fixe 60 installée sur une paroi 31 de structure, à l'endroit où une surveillance de corrosion doit être faite. Dans le cas présent, une autre paroi 64 ne permet pas un accès direct à la partie 60 et aux moyens de connexion 63a pour effectuer la mesure. Une fibre optique 65, connectée à la fibre optique interne 62, traverse la deuxième paroi 64 pour être reliée à des moyens de connexion 63c, accessibles sur la deuxième paroi 64. La fibre optique de prolongation 65 peut être continue avec la fibre interne 62, ou coopérer avec les moyens 63a par des moyens de connexion 63b. Pour effectuer les mesures de contrôle de l'état de la corrosion de la structure, il suffit de connecter une partie de mesure 61 sur les moyens de connexion 63c.

La réalisation selon la figure 8 est avantageusement utilisée dans le cas de surveillance de structures constituées par des doubles parois: réservoirs isolés, double coques de navires,...

Egalement, on peut rassembler toutes les fibres optiques 65 correspondantes à l'ensemble des points de contrôle de la corrosion, pour rendre accessibles leurs extrémités (moyens de connexion 63c) dans un même lieu, par exemple une cabine de contrôle.

Une autre application est de disposer la partie mesure 61 hors d'un périmètre de sécurité antidéflagrant.

## Revendications

1. Dispositif de détection de la corrosion induite par un milieu, **caractérisé en ce qu'**il comporte une chambre fermée (5) par une pastille (4) fabriquée dans un matériau tel que ladite pastille devient perméable audit milieu une fois corrodée par ledit milieu, et des moyens de mesure de l'indice de réfraction du fluide présent dans la chambre.

2. Dispositif selon la revendication 1, dans lequel lesdits moyens de mesure comprennent une source lumineuse (10) et un photo détecteur (11).

3. Dispositif selon l'une des revendications 1 ou 2, dans lequel lesdits moyens de mesure de l'indice de réfraction comprennent au moins une portion de fibre optique.

4. Dispositif selon la revendication 3, dans lequel une extrémité de la fibre optique se trouve proche de la pastille.

5. Dispositif selon l'une des revendications précédentes dans lequel ladite chambre contient de l'air.

6. Dispositif selon l'une des revendications précédentes dans lequel ladite pastille est liée à un support résistant à la pression du milieu corrosif.

7. Dispositif selon la revendication 6, dans lequel ledit support est perméable audit milieu.

8. Dispositif selon l'une des revendication 1 à 5, comprenant des moyens d'équilibrage de la pression de part et d'autre de ladite pastille.

9. Dispositif selon l'une des revendications précédentes, dans lequel les moyens de mesures de l'indice de réfraction sont inclus dans ladite chambre.

10. Dispositif selon la revendication 9, comprenant au moins l'un des moyens de transmission des mesures suivants:
- ondes (radio, ultrasons, électromagnétiques);
- fibre optique;
- conducteur électrique.

## Claims

1. A device for detecting the corrosion induced by a medium, **characterized in that** it comprises a chamber (5) closed by a closing disc (4) made of such a material that said disc becomes permeable to said medium once corroded by said medium, and means for measuring the refractive index of the fluid present in the chamber.

2. A device as claimed in claim 1, wherein said measuring means comprise a light source (10) and a photodetector (11).

3. A device as claimed in any one of claims 1 or 2, wherein said refractive index measuring means comprise at least one optical fibre portion.

4. A device as claimed in claim 3, wherein one end of the optical fibre is close to the disc.

5. A device as claimed in any one of the previous claims, wherein said chamber contains air.

6. A device as claimed in any one of the previous claims, wherein said disc is connected to a support withstanding the pressure of the corrosive medium.

7. A device as claimed in claim 6, wherein said support is permeable to said medium.

8. A device as claimed in any one of claims 1 to 5, comprising means for balancing the pressure on either side of said disc.

9. A device as claimed in any one of the previous claims, wherein the refractive index measuring means are included in said chamber.

10. A device as claimed in claim 9, comprising at least one of the following measurement transmission means:
- waves (radio, ultrasonic, electromagnetic),
- optical fibre,
- electric conductor.

## Patentansprüche

1. Vorrichtung zur Erkennung der Korrosion, die durch ein Medium induziert wird, **dadurch gekennzeichnet, dass** sie eine Kammer (5) umfasst, die durch ein Pastille (4) verschlossen wird, die aus einem derartigen Material hergestellt ist, dass diese Pastille in diesem Medium durchlässig wird, sobald sie von diesem Medium korrodiert wird, und Mittel zum Messen des Brechungsindexes des in der Kammer vorhandenen Fluids.

2. Vorrichtung nach Anspruch 1, wobei diese Messmittel eine Lichtquelle (10) und einen Photodetektor (11) umfassen.

3. Vorrichtung nach einem der Ansprüche 1 oder 2, wobei diese Mittel zum Messen des Brechungsindexes mindestens einen Glasfaserabschnitt aufweisen.

4. Vorrichtung nach Anspruch 3, wobei ein Ende der Glasfaser in der Nähe der Pastille liegt.

5. Vorrichtung nach einem der vorherigen Ansprüche, wobei die Kammer Luft enthält.

6. Vorrichtung nach einem der vorherigen Ansprüche, wobei diese Pastille mit einem Träger verbunden ist, der dem Druck des korrosiven Mediums widersteht.

7. Vorrichtung nach Anspruch 6, wobei dieser Träger dem Medium gegenüber durchlässig ist.

8. Vorrichtung nach einem der Ansprüche 1 bis 5, umfassend Mittel zum Ausgleich des Drucks beiderseits der Pastille.

9. Vorrichtung nach einem der vorherigen Ansprüche, wobei die Mittel zum Messen des Brechungsindexes in der Kammer enthalten sind.

10. Vorrichtung nach Anspruch 9, umfassend mindestens eines der folgenden Mittel zum Übertragen der Messungen:
- Wellen (Funkwellen, Ultraschallwellen, elektromagnetische Wellen);
- Lichtwellenleiter;
- elektrischer Leiter.
